(19) Europäisches Patentamt
European Patent Office
Office européen des brevets

(11) Veröffentlichungsnummer: **0 147 554**
**B1**

(12) # EUROPÄISCHE PATENTSCHRIFT

(45) Veröffentlichungstag der Patentschrift: **26.08.87**

(51) Int. Cl.⁴: **C 08 J 3/02**, C 08 L 63/00

(21) Anmeldenummer: **84112493.6**

(22) Anmeldetag: **17.10.84**

(54) **Epoxidharz-Diammoniumsalz-Emulsion und Verfahren zu ihrer Herstellung.**

(30) Priorität: **15.12.83 DE 3345399**

(43) Veröffentlichungstag der Anmeldung: **10.07.85 Patentblatt 85/28**

(45) Bekanntmachung des Hinweises auf die Patenterteilung: **26.08.87 Patentblatt 87/35**

(84) Benannte Vertragsstaaten: **AT BE CH DE FR GB IT LI NL SE**

(56) Entgegenhaltungen:
**EP - A - 0 005 617**
**EP - A - 0 043 463**
**GB - A - 1 244 424**
**US - A - 3 640 909**

**CHEMICAL ABSTRACTS, Band 85, 1976, Seite 42, Nr. 95244z, Columbus, Ohio, US**

(73) Patentinhaber: **HÜLS AKTIENGESELLSCHAFT, Patentabteilung / PB 15 - Postfach 13 20, D-4370 Marl 1 (DE)**

(72) Erfinder: **Weiss, Jörn-Volker, Dr., Im Hadkamp 1, D-4358 Haltern 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Es bedurfte wahrscheinlich erst des spektakulären Zusammenbruchs eines so technisch anspruchsvollen Bauwerks wie das der Berliner Kongresshalle, dass die breite Öffentlichkeit Notiz von dem schlechten Bauzustand vieler nach dem 2. Weltkrieg errichteter Stahlbaukonstruktionen nimmt.

Der Fachmann beobachtet schon sein einigen Jahren, dass sich der Zustand vieler erst in jüngerer Zeit fertiggestellter Bauwerke teilweise dramatisch verschlechtert. Für diesen Trend lassen sich eine Reihe von Ursachen anführen:

1. Während ältere Bauwerke vielfach in massiver Bauweise erstellt wurden, werden bei neueren Bauwerken aus örtlichen Gegebenheiten und wirtschaftlichen und ästhetischen Aspekten feingliedrige Konstruktionen bevorzugt.
2. Nicht nur die wechselnden Witterungsbedingungen (Temperaturen, Sonneneinstrahlung, Feuchtigkeit), sondern auch in zunehmendem Masse chemische Einflüsse (Streusalz, Kohlendioxid, Stickoxide, Schwefeldioxid) tragen dazu bei, dass sich die Qualität der Bausubstanz rapide verschlechtert.
3. Die Folgen der kombinierten physikalischen und chemischen Einwirkungen sind die Carbonatisierung des Betons, die Aufhebung der Passivierung, die Bildung von Rost und schliesslich das Abplatzen der Überdeckung.
4. Gleichzeitig nehmen die Belastungen zu. Brükkenkonstruktionen sind durch den Schwerlastverkehr und das zunehmende Verkehrsaufkommen einer zusätzlichen Beanspruchung ausgesetzt.

Ein Abriss und Wiederaufbau beschädigter Bauwerke lässt sich nur in seltenen Fällen wirtschaftlich rechtfertigen. Es geht also darum, die beschädigten Bauwerke zu erhalten. Gesucht sind Verfahren, mit denen eine Sanierung durchgeführt werden kann; gesucht sind insbesondere Materialien, die für derartige Sanierungen geeignet sind. Aufgrund ihrer chemischen Verträglichkeit mit Stahl und Beton haben sich Epoxidharz-Zement-Mörtel (ECC) besonders bewährt.

Ein kunststoffhaltiges Bindemittel wird beispielsweise in der DE-B 1 198 267 beschrieben. Es besteht aus einem hydraulischen Zement, Wasser, einem bei gewöhnlicher Temperatur härtbarten Harz, z.B. einem Epoxidharz, und einem Härtungsmittel. Die Herstellung dieses Bindemittels ist umständlich, da zwei Vormischungen getrennt voneinander hergestellt werden müssen und erst unmittelbar vor Gebrauch vereinigt werden dürfen. Die relativ kurze Verarbeitungszeit von etwa 1 bis 2 Stunden ist der grundsätzliche Mangel nicht nur dieses Systems, sondern aller sogenannter 2K-Systeme (siehe beispielsweise DE-A 2 840 874). Nach jedem Gebrauch müssen alle Arbeitsgeräte, die mit dem Bindemittel in Berührung gekommen sind, gründlich gereinigt werden, wenn es nicht zu schwer zu entfernenden Ablagerungen, Verstopfungen usw. kommen soll.

Gegenstand der US-A 3 926 886 ist eine 1K-Epoxidharz-Diammoniumacetat- oder -formiat-Emulsion, die aus einem flüssigen Epoxidharz, Wasser und einem substituierten Diammoniumsalz besteht. In Gegenwart von Zement findet die Härtung statt.

Das Diammoniumsalz soll bei diesem Verfahren eine doppelte Funktion einnehmen: einmal soll es nach Reaktion mit dem alkalisch wirkenden Zement das zugrundeliegende Diamin freisetzen, das dann das Epoxidharz aushärtet, zum anderen soll es die Funktion eines Emulgators wahrnehmen. Die Stabilität der auf diese Weise erhaltenen Emulsion ist jedoch nicht gewährleistet, insbesondere dann nicht, wenn unter extremen Witterungsbedingungen gearbeitet werden muss. Daher wird bereits in der US-A 3 926 886 vorgeschlagen, der Mischung bis zu 15% eines handelsüblichen Emulgators zuzusetzen. Indessen bleibt auch nach solchen Zusätzen die Stabilität der Emulsion eine kritische Grösse.

Die Aminkomponente soll also nicht, wie dies beispielsweise in der EP-A1-0 043 463 beschrieben ist, mit Epoxidharzen bei erhöhter Temperatur zu Addukten reagieren, die durch Zusätze von Säure wasserlöslich und dispergierbar gemacht werden, vielmehr geht es hier darum, eine Emulsion aus einem Diammoniumsalz und einem Epoxidharz herzustellen, bei der erst nach Zusatz eines alkalisch reagierenden Stoffes der Aushärtungsprozess bei Temperaturen über 0°C eingeleitet wird.

Der einschlägigen Patentliteratur sind zahlreiche Emulgatoren für wässriges Epoxidharz-Dispersionen zu entnehmen:

US-A 3 879 324
Oberflächenaktive Stoffe, wie anionische und kationische Verbindungen;

CA-A 879 750
Mischungen aus Nonylphenoxypoly-(ethoxy)$_{19}$--ethanol und Alkylpenolpolyglykolethern mit 4 bis 9 Mol angelagertem Alkylenoxid;

DE-C 2 800 323
Poly-(ethylenoxid)-ester von Fettsäuren;

DE-B 1 669 772
Anlagerungsprodukte von 25 bis 30 Molen Alkylenoxid an Abietinsäure;

US-PS 3 020 250
Synthetische Verbindungen, Proteine;

DE-OS 1 925 941
Amin-Epoxidharz-Kondensationsprodukte;

DE-AS 2 332 165
Mischungen aus Abietinsäurepolyglykolestern, Polyglykolethern von Fettsäuren und/oder Polyglykolethern von p-Alkylphenol und langkettiger aliphatischer Alkohole mit 8 bis 18 Kohlenstoffatomen.

Schliesslich beschreibt die DD-PS 135 915 2K-Dispersionen aus einem Polysulfid, einem Polyepoxid und Polyvinylalkohol, die als Beschichtungsmittel oder als Zementzusatz Verwendung finden. Baumaterialien, die organisch gebundenen Schwefel enthalten, werden wegen ihrer erhöhten Korrosionsgefahr im Hinblick auf Stahl in der Praxis vermieden.

In jüngster Zeit konnten 2 Formulierungen entwickelt werden, die denen der amerikanischen Patentschrift 3 926 886 hinsichtlich Verfügbarkeit der

Aminokomponente, Stabilität der Emulsion und Anwendungsbreite eindeutig überlegen sind.

Gegenstand der DE-A 3 222 531 sind Emulsionen, die aus einem Epoxidharz, einem primären aliphatischen $C_{12-14}$-Alkohol und/oder dessen Addukt mit Ethylenoxidgruppen, Wasser und dem Salz eines Alkylendiamins und Oxalsäure bestehen.

In der DE-A 3 222 528 wird als latenter Härter das Salz aus einem Polyamin oder einem Polyaminoamid mit Oxalsäure verwendet.

Trotz der erzielten Verbesserungen bleibt die Stabilität der Emulsion eine kritische Grösse. Probleme treten insbesondere dann auf, wenn die Epoxidharze selbst nicht wasseremulgierbar sind. Darüber hinaus macht sich bei der Herstellung der ECC-Mörtel die Bildung von Luftporen negativ bemerkbar.

Ein Ziel der vorliegenden Erfindung war es daher, verbesserte Epoxidharz-Diammoniumsalz-Emulsionen zu entwickeln. Ein weiteres Ziel dieser Erfindung war es, Emulsionen für den Baubereich zur Verfügung zu stellen, die problemlos verarbeitbar sind. Schliesslich sollten die Emulsionen nicht nur im Bereich der Sanierung, sondern auch in möglichst vielen anderen Anwendungsgebieten einsetzbar sein.

Es wurden jetzt Emulsionen gefunden, die diesen Zielvorstellungen entsprechen. Ihre Zusammensetzung ist Gegenstand der Ansprüche 1 bis 8, Anspruch 9 betrifft ein Herstellverfahren und die Ansprüche 10 bis 17 verschiedene Anwendungsmöglichkeiten.

Es war zwar bekannt, dass sich durch bestimmte Polymerzusätze, wie beispielsweise Polyvinylalkohole, die Flexibilität von Betonen bedeutend erhöhen lässt (EP-A1-0 055 035), aber es ist auch bekannt, dass Betone, die Polyvinylacetat enthalten, sich in der Praxis nicht bewährt haben. Dies liegt daran, dass es unter Einwirkung von Feuchtigkeit zu einer Verseifung des Polyvinylacetats und damit zu einer Bildung von Polyvinylalkohol kommt. Gleichzeitig verschlechtern sich die betontechnischen Eigenschaften (vgl. DE-A 3 136 737).

Es sei ausdrücklich darauf hingewiesen, dass unter Emulsionen im Rahmen dieser Anmeldung nicht nur die 2-Phasen-Systeme gemeint sein sollen, die durch Dispersion einer flüssigen Phase in einer anderen flüssigen Phase entstanden sind, sondern auch jene Systeme, in denen eine feste Phase in einer flüssigen Phase dispergiert ist sowie alle Übergänge dieser beiden Systeme.

Die Komponenten der Emulsionen gemäss der vorliegenden Erfindung können wie folgt näher charakterisiert werden:

Bei den Epoxidharzen handelt es sich um flüssige Verbindungen auf Basis von 2,2-Bis-(4-hydroxyphenyl)-alkanen und Epichlorhydrin oder Glycidol. Die präzise chemische Struktur der im Handel erhältlichen Produkte, wie EUREPOX® der Fa. Schering, Berlin, ist unbekannt. Besonders geeignet sind in Wasser emulgierbare Epoxidharze, wie z.B. RÜTAPOX® VE 2913 der Fa. Bakelite GmbH, Duisburg.

Der latende Härter stellt das Diammoniumsalz aus einem Diamin der Formel I oder II und einer organischen Säure dar. Erfindungsgemäss verwendet werden Diamine der Formeln I oder II

I $H_2N-CH_2-R-NH_2$

II $H_2N-R-CH_2-R-NH_2$,

wobei R
- ein gegebenenfalls substituierter Alkylenrest mit 4 bis 9 C-Atomen,
- ein gegebenenfalls substituierter Cycloalkylenrest mit 6 bis 9 C-Atomen oder
- ein gegebenenfalls substituierter Aralkylenrest mit 7 bis 9 C-Atomen ist.

Insbesondere eignen sich Alkylen- und Cyclohexylenreste, die durch ein bis drei Methylgruppen substituiert sind. Bevorzugte Beispiele für Formel I sind 2,2,4- und/oder 2,4,4-Trimethylhexamethylendiamin, 2-Methylpentamethylendiamin, Isophorondiamin(3-Aminomethyl-3,5,5-trimethylcyclohexylamin) sowie Xylylendiamin. Bevorzugtes Beispiel für ein Diamin entsprechend Formel II ist 4,4'-Diamino-3,3'-dimethyldicyclohexylmethan. Selbstverständlich können auch Diamingemische verwendet werden. Die Menge des Diamins richtet sich nach den Angaben des Epoxidharzherstellers, z.B. dem Epoxidwert des eingesetzten Epoxidharzes oder dem angegebenen Mischungsverhältnis von Harz und Härter.

Die geeigneten Säuren können ein- und zweibasig sein, Hydroxylgruppen enthalten und bis 12 C-Atome aufweisen. Sie können gesättigt und auch ungesättigt, aliphatisch, cycloaliphatisch oder aromatisch sein. Bevorzugt werden Ameisensäure, Essigsäure, Oxalsäure, Adipinsäure, Weinsäure und Phthalsäure.

Die für eine Emulsion günstige Wassermenge ist im wesentlichen von der Art des Diamins abhängig. Bei Diaminen mit einer relativ kleinen Anzahl von Kohlenstoffatomen, z.B. 7, ist weniger Wasser als bei Diaminen mit einer grösseren Anzahl von Kohlenstoffatomen, z.B. 12, erforderlich. Durch Variation der Wassermenge zwischen 30 und 250%, bezogen auf die eingesetzte Menge Epoxidharz, kann die optimale Menge durch Vergleichsversuche leicht ermittelt werden.

Als Emulgator wird verwendet:

1. ein durch Verseifung von Polyvinylacetat gewonnener Polyvinylalkohol mit einem Hydrolysegrad von mindestens 70% und einem Molekulargewicht von mindestens 5000, insbesondere von 10 000 bis 100 000 (siehe Römpps Chemie-Lexikon, 7. Auflage),
2. ein Polyoxazonlin mit einem Molekulargewicht von 10 000 bis 100 000, erhalten durch Polymerisation von 2-Alkyl-$\Delta$2-oxazolinen, wobei die Alkylgruppe 1 bis 5 C-Atome aufweist (siehe DE-OS 3 036 119) und Angew. Chemie 78, 913 (1966),
3. ein Copolymerisat des N-Vinylpyrrolidons mit
   a) Vinylestern ein- oder zweibasiger Carbonsäuren mit bis zu 6 C-Atomen,
   b) (Meth)Acrylester von ein- und zweiwertigen Alkoholen mit bis zu 6 C-Atomen,
   c) Malein-, Fumar-, Crotonsäure und/oder
   d) Styrol.

N-Vinylpyrrolidon-Copolymerisate sind in folgenden deutschen Patentschriften beschrieben: 2 218 935, 2 255 263, 2 456 807 und 2 514 127.

Besonders geeignet ist COLLACRAL® VL, ein Produkt der Fa. BASF, Ludwigshafen.

Der Emulgator wird — bezogen auf die Epoxidharzmenge — in Mengen von 0,5 bis 40% eingesetzt.

Beim Vermischen der Emulsion mit Frischbeton kann es zu unerwünschter Luftporenbildung kommen. Sie lässt sich auf einfache Weise durch Zusatz von 0,5 bis 5 Gewichtsprozent Entschäumer, bezogen auf das Gesamtgewicht der Emulsion, unterdrücken. Geeignet sind insbesondere Entschäumer auf Silicon- oder Kohlenwasserstoffbasis, wie z.B. RD Entschäumer-Emulsion der Fa. Dow Corning, Düsseldorf, Entschäumer NOPCO® der Fa. Münzing Chemie GmbH, Heilbronn, oder die DEHYDRAN®-Typen der Fa. Henkel KGaA.

Zusätzlich können weitere Hilfsstoffe, wie Betonverflüssigungsmittel und Beschleuniger, den Emulsionen zugesetzt werden (siehe EP-A 0 090 434).

Betonverflüssigungsmittel auf Basis von Melaminharzen, wie z.B. MELMENT® (Hersteller: Süddeutsche Kalkstickstoff-Werke AG, D-8223 Trostberg), dienen dazu, die Fliessfähigkeit von Mörtelmischungen zu erhöhen. Ihr Anteil beträgt 0,1 bis 8%, bezogen auf das Gesamtgewicht der Emulsion.

Die Funktion der Beschleuniger besteht darin, eine schnelle und vollständige Aushärtung des Epoxidharzes zu bewirken.

Geeignet sind im Prinzip bekannte N- und P-haltige Verbindungen, insbesondere tertiäre Amine mit bis zu 20 C-Atomen und Ester phosphoriger Säuren mit bis zu 25 C-Atomen, wie z.B. N-Benzyl-dimethylamin und Triphenylphosphit. Sie werden in Mengen von 2 bis 5%, bezogen auf das Epoxid, eingesetzt.

Die Herstellung der Emulsionen erfolgt zweckmässigerweise in der Weise, dass man

- — zunächst eine wässrige Lösung des Emulgators vorlegt,
- — gegebenenfalls einen Entschäumer zufügt,
- — die Säure zusetzt,
- — soviel Diamin zufügt, bis ein pH-Wert von 6 bis 6,5 erreicht ist,
- — gegebenenfalls weitere Hilfsstoffe, wie beispielsweise Betonverflüssigungsmittel und Beschleuniger, zufügt und
- — schliesslich in die erhaltene Mischung das flüssige Epoxidharz einrührt.

Abweichungen von diesem üblichen Herstellverfahren sind möglich und können in Einzelfällen vorteilhaft sein. So kann beispielsweise die Reihenfolge der Zugabe von Säure und Diamin vetauscht werden. Man kann auch das Diammoniumsalz vorher separat herstellen und dann der Mischung zusetzen. Entscheidend ist in allen diesen Fällen, dass der pH-Wert der Mischung unter 7, besser unter 6,5 liegen muss, wenn das Epoxid eingerührt wird. Andererseits sollte der pH-Wert aber auch nicht unter 6 liegen, da sonst dem hydraulischen Bindemittel zuviel Alkalität entzogen wird. Nach beendeter Zugabe wird noch 0,5 bis 1,0 Stunden nachgerührt. Es werden so Emulsionen erhalten, die bei Raumtemperatur über Monate stabil sind. Beim Auftreten einer Phasentrennung lassen sich die Mischungen durch erneutes Rühren schnell wieder homogenisieren.

Die Emulsionen besitzen die Eigenschaft, erst in Gegenwart von alkalischen Agentien, wie anorganischen Basen, Zement und anderen alkalisch abbindenden Bindemitteln, auszuhärten. Zwar wird üblicherweise die Härtung in Gegenwart von Zement durchgeführt, geeignet sind jedoch beispielsweise auch Härtungsmischungen, die Alkali- oder Erdalkalihydroxide, Cylciumoxid oder andere basisch reagierende Oxide enthalten. Mineralische Füllstoffe, wie Sand, feingemahlenes Siliciumdioxid und ähnliche Füllstoffe, beeinträchtigen die Härtung nicht.

Die Emulsionen gemäss der vorliegenden Erfindung sind in überaus vielfältiger Weise im Baubereich einsetzbar, wobei die Sanierung bereits bestehender Bauten ein Anwendungsschwerpunkt ist.

Besonders geeignet sind die Emulsionen für den Einsatz im Trockenspitzbetonverfahren (vgl. DE-A 3 136 737). Wenn etwa senkrechte Mauern, Decken, Rohre oder Tunnel mit Beton behandelt werden sollen, benötigt man Betonmischungen, die nach Aufspritzen möglichst quantitativ an der Mauer haften bleiben. Die vorliegenden Emulsionen erfüllen diese Forderung. Durch eine variable Zumischung der hier beschriebenen Emulsionen zu dem benötigten Anmachwasser ist es möglich, je nach Anforderung des Untergrunds mit unterschiedlichem Kunststoff/Zement-Verhältnis zu arbeiten. Vorzugsweise beträgt das Wasser/Zement-Verhältnis 0,35 bis 0,65 und das Verhältnis von Epoxid und Diamin zu Zement 0,035 bis 0,15.

Ausgehärtete ECC-Mörtel weisen im Vergleich zu herkömmlichen Mörteln eine höhere Widerstandsfähigkeit gegenüber dem Eindringen von Wasser auf. Dies gilt auch für wässrige Chemikalienlösungen. Aus diesem Grunde eignen sich die Emulsionen in hervorragender Weise zur Herstellung von Fertigbaubetonteilen, wie z.B. Abwasserrohren.

Spachtel- und Klebemassen auf Basis hydraulisch abbindender Bindemittel, die etwa im Fliesenbereich eingesetzt werden, enthalten vorteilsweise in Mengen zwischen 3 und 75% die beschriebenen Emulsionen. Haftfestigkeit und Verarbeitungszeit entsprechen den in diesem Bereich geforderten Werten.

Das gleiche gilt auch für Injektionsmassen auf Basis hydraulisch abbindender Bindemittel, die zur Sanierung von Bauten aller Art verwendet werden. Auch hier kommt es auf die hohe Haftfestigkeit an.

Schliesslich werden die Emulsionen zur Herstellung von Estrichen verwendet, insbesondere dann, wenn die Oberfläche besonderen Belastungen ausgesetzt ist.

a) Herstellung der Emulsionen

(Die Mengenangaben der Oxalsäure beziehen sich stets auf das Dihydrat.)

*Beispiel 1*

In einem Standkolben mit mechanischem Rührer werden 104 Gewichtsteile Wasser, 44 Gewichtsteile einer wässrigen 10%igen Polyvinylalkohollösung (PVAL GH-20 der Fa. Nippon Synthetic Chemical Industry Co., Ltd.) und 4,5 Gewichtsteile eines siliconhaltigen Entschäumers (Entschäumer RD der Fa. Dow Corning, Düsseldorf) vorgelegt. In der erhaltenen Mischung werden 30,3 Gewichtsteile Oxalsäure gelöst und 40,6 Gewichtsteile Isophorondiamin portionsweise so langsam zugetropft, dass eine Temperatur von 80 °C nicht überschritten wird. Darauf werden bei einer Temperatur über 60 °C 173 Gewichtsteile des Epoxidharzes RÜTAPOX® VE 2913 eingetragen. Man lässt das Gemisch auf Raumtemperatur abkühlen und rührt noch eine Stunde nach. Man erhält eine stabile mittelviskose Emulsion, die auch nach 3monatigem Stehenlassen bei Raumtemperatur keinerlei Veränderungen aufweist.

Die Diamine werden in den Tabellen wie folgt abgekürzt:

IPD = Isophorondiamin
MPDA = 2-Methylpentamethylendiamin
XDA = Xylylendiamin
DDDM = 4,4-Diamino-3,3'-dimethyldicyclohexylmethan
TMD = Isomerengemisch aus 2,2,4- und 2,4,4-Trimethylhexamethylendiamin

TABELLE 1

| Zusammensetzung | Beispiele 1 | 2 | 3 | 4 | 5 | 6 |
|---|---|---|---|---|---|---|
| Wasser | 104 | 47 | | 260 | 200 | 470 |
| Emulgator 4) | 44 | 94,5 | 100 | 200 | 200 | 302 |
| Entschäumer3) | 4,5 | 5,0 | 1 | 10 | 10 | 29 |
| Säure | Oxalsäure | Ameisens. | Oxalsäure | Oxalsäure | Oxals./Ameisens. | Oxalsäure |
| Säuremenge | 30,3 | 24,2 | 7 | 59 | 35/25,6 | 207 |
| Diamin | IPD | IPD | IPD | IPD | IPD | IPD |
| Diaminmenge | 40,6 | 44,4 | 9,5 | 79,8 | 94 | 278 |
| Betonverflüssiger2) | — | — | — | — | — | 30 |
| Epoxidharz | RÜTAPOX® VE 2913 | RÜTAPOX® VE 2913 | RÜTAPOX® VE2913 | DER1) | EPIKOTE® 8285) | RÜTAPOX® VE 2913 |
| Epoxidharzmenge | 173 | 189 | 40 | 400 | 400 | 1182 |

(Mengenangaben in Gewichtsteilen)

1) Es handelt sich um eine Epoxidharzmenge aus DER 331 und DER 732 (Hersteller: Fa. Dow Chemical Rheinwerk, D-7587 Rheinmünster) im Gewichtsverhältnis 7 : 3
2) Es handelt sich um den Betonverflüssiger CERINOL®-BV-Flüssig (Hersteller: Fa. Deitermann, D-4354 Datteln)
3) Es handelt sich um die RD-Entschäumer-Emulsion (Hersteller: Fa. Dow Corning, Düsseldorf)
4) Es handelt sich um den Polyvinylalkohol PVAL GH-20 (Hersteller: Fa. Nippon Synthetic Chemical Industry Co., Ltd., Osaka, Japan), der in Form einer 10%igen wässrigen Lösung eingesetzt wird
5) Es handelt sich um ein Produkt der Fa. Shell AG, Hamburg

TABELLE 2

| Zusammensetzung | Beispiele 7 | 8 | 9 | 10 | 11 |
|---|---|---|---|---|---|
| Wasser | 99 | 65 | 50 | 130 | 100 |
| Emulgator | COLLACRAL® VL2) | PVAL GH-201) | PVAL GH-201) | POLYVIOL®3) V 03/20 | COLLACRAL® VL2) |
| Emulgatormenge | 41,5 | 90 | 100 | 67 | 33 |
| Entschäumer1) | 3 | 5 | 5 | 5 | 5 |
| Säure (bzw. Ammoniumsalz) | IPD/Oxalsäure | Essigsäure | IPD/Phthals. | Ameisensäure | XDA/Oxalsäure |
| Menge | 102 | 31,5 | 93 | 26 | 73 |
| Diamin | — | IPD | — | MPDA | — |
| Diaminmenge | — | 42,3 | — | 32 | — |
| Betonverflüssiger1) CERINOL®-1 4-BV-Flüssig | 6,5 | — | — | — | — |
| Epoxidharz4) | 249 | 180 | 200 | 200 | 200 |

*Fussnoten zu Tabelle 2*

1) Siehe entsprechende Fussnote zu Tabelle 1

2) Es handelt sich bei diesem Emulgator um eine 30%ige wässrige Lösung eines Copolymerisats auf Basis von N-Vinylpyrrolidon (Hersteller: Fa. BASF, Ludwigshafen)

3) Es handelt sich um die 20%ige wässrige Lösung eines Polyvinylalkohols unter der Bezeichnung POLYVIOL® V 03/20 (Hersteller: Fa. Wacker-Chemie GmbH, München)

4) Es handelt sich in allen Fällen um das Epoxidharz RÜTAPOX® VE 2913 (Hersteller: Fa. Bakelite, Duisburg)

TABELLE 3

| Zusammensetzung | Beispiele 12 | 13 | 14 | 15 | 16 |
|---|---|---|---|---|---|
| Wasser | 150 | 50 | 40 | 100 | 20 |
| Emulgator | COLLACRAL® VL | PVAL GH-20[1] | PVAL GH-20[1] | PVAL GH-20[1] | Polyoxazolin[2] |
| Emulgatormenge | 30 | 100 | 100 | 120 | 70 |
| Entschäumer[1] | 5 | 5 | 10 | 5 | 5 |
| Säure (bzw. Ammoniumsalz) | Oxalsäure | Oxalsäure | Oxals./Ameisensäure | Weins./Oxals. | IPD/Oxalsäure |
| Menge | 38 | 35 | 17,5/13 | 10/31 | 82 |
| Diamin | DDDM | TMD | IPD | IPD | — |
| Diaminmenge | 66 | 43,7 | 47 | 47 | — |
| Epoxidharz | RÜTAPOX® VE 2913 | RÜTAPOX® VE 2913 | RÜTAPOX® VE 2913 | RÜTAPOX® VE2913 | RÜTAPOX® VE 2913 |
| Epoxidharzmenge | 200 | 200 | 200 | 200 | 200 |

1) Siehe entsprechende Fussnote zu Tabelle 1

2) Es handelt sich um die 20%ige Lösung eines Polyoxazolins, das gemäss Beispiel 6 der DE-OS 3 036 119 durch Polymerisation eines Gemisches aus 70% 2-i-Propyl-△2-oxazolin und 30% 2-Methyl-△2-oxazolin erhalten wurde

TABELLE 4 (Beispiel 17)

| Zusammensetzung | Gewichtsteile |
|---|---|
| Wasser | 30 |
| Emulgator[1] | 100 |
| Entschäumer[1] | 5 |
| Ameisensäure | 10 |
| Oxalsäure | 17,5 |
| Dodecandisäure | 9 |
| IPD | 47 |
| Epoxidharz RÜTAPOX® VE 2913 | 200 |

1) Siehe Fussnote zu Tabelle 1

*Beispiel 18*

Analog zu Beispiel 1 wurde eine Emulsion hergestellt, jedoch ohne Zusatz von Entschäumer.

b) Herstellung von Epoxidharz-Zement-Mörteln

*Beispiel 19*

Eine Mischung aus 100 Gewichtsteilen Portlandzement 35 F, 230 Gewichtsteilen Sand 0/1 mm und 130 Gewichtsteilen Sand 1/2 mm wurde mit 42,8 Gewichtsteilen Wasser und mit 29,6 Gewichtsteilen der Emulsion nach Beispiel 1 versetzt und gut durchgemischt. In Anlehnung an die DIN 1164 wurden Prüfkörper hergestellt, gelagert und einer Festigkeitsprüfung unterzogen.

*Beispiel 20*

Analog zu Beispiel 19 wurde ein Epoxidharz-Zement-Mörtel aus

100 Gewichtsteilen Portlandzement 35 F
230 Gewichtsteilen Sand 0/1 mm
130 Gewichtsteilen Sand 1/2 mm
26,9 Gewichtsteilen der Emulsion nach Beispiel 2 und
45,3 Gewichtsteilen Wasser

hergestellt und nach DIN 1164 geprüft.

*Vergleichsbeispiel A*

Entsprechend der Norm DIN 1164 wurde ein Prüfkörper aus

100 Gewichtsteilen Portlandzement 35 F
230 Gewichtsteilen Sand 0/1 mm
130 Gewichtsteilen Sand 1/2 mm und
55 Gewichtsteilen Wasser

hergestellt und einer Festigkeitsprüfung unterzogen.

TABELLE 5

| | Beispiel A | Beispiel 19 | Beispiel 20 |
|---|---|---|---|
| Biegezugfestigkeit ($N/mm^2$) | | | |
| a) | 9,09 | 9,28 | 9,88 |
| b) | 6,14 | 9,21 | 9,08 |
| c) | 9,24 | 10,43 | 11,52 |
| Druckfestigkeit ($N/mm^2$) | | | |
| a) | 41,1 | 45,7 | 46,6 |
| b) | 29,3 | 39,3 | 35,2 |
| c) | 42,8 | 46,1 | 47,0 |

Die Buchstaben a), b) und c) in den Tabellen 5, 6 und 7 haben folgende Bedeutungen:

a) 7 Tage Feuchtlagerung, anschliessend 21 Tage Raumlagerung

b) 28 Tage Raumlagerung

c) 7 Tage Feuchtlagerung, anschliessend 35 Tage Raumlagerung

*Beispiel 21*

Analog zu Beispiel 19 wurde ein Epoxidharz-Zement-Mörtel aus

100 Gewichtsteilen Portlandzement 35 F

230 Gewichtsteilen Sand 0/1 mm

130 Gewichtsteilen Sand 1/2 mm

33,2 Gewichtsteilen der Emulsion nach Beispiel 3 und

28,0 Gewichtsteilen Wasser

hergestellt und nach DIN 1164 geprüft.

*Beispiel 22*

Analog zu Beispiel 19 wurde ein Epoxidharz-Zement-Mörtel aus

100 Gewichtsteilen Portlandzement 35 F

230 Gewichtsteilen Sand 0/1 mm

130 Gewichtsteilen Sand 1/2 mm

19,4 Gewichtsteilen der Emulsion nach Beispiel 5 und

41,8 Gewichtsteilen Wasser

hergestellt und nach DIN 1164 geprüft.

*Vergleichsbeispiel B*

Analog zu Vergleichsbeispiel A wurde ein Zementmörtel aus

100 Gewichtsteilen Portlandzement 35 F

230 Gewichtsteilen Sand 0/1 mm

130 Gewichtsteilen Sand 1/2 mm und

50 Gewichtsteilen Wasser

hergestellt und nach DIN 1164 geprüft.

TABELLE 6
Festigkeitsprüfung nach DIN 1164

| | Beispiel B | Beispiel 21 | Beispiel 22 |
|---|---|---|---|
| Biegezugfestigkeit ($N/mm^2$) | | | |
| a) | 8,7 | 11,5 | 9,5 |
| Druckfestigkeit ($N/mm^2$) | | | |
| a) | 52,5 | 56,0 | 50,5 |

*Beispiele 23.1 bis 23.6*

Analog zu Beispiel 19 wurden folgende Epoxidharz-Zement-Mörtel-Mischungen hergestellt und geprüft:

TABELLE 7
(Angaben in Gewichtsteilen)

| Zusammensetzung | Beispiele 23.1 | 23.2 | 23.3 | 23.4 | 23.5 | 23.6 |
|---|---|---|---|---|---|---|
| Portlandzement 35 F | 100 | 100 | 100 | 100 | 100 | 100 |
| Sand 0/1 mm | 200 | 200 | 200 | 200 | 200 | 200 |
| Sand 1/2 mm | 100 | 100 | 100 | 100 | 100 | 100 |
| Wasser | 42,5 | 58 | 38,4 | 53,9 | 37,1 | 52,6 |
| Emulsion nach Beispiel 14 | — | — | 12,5 | 12,5 | 16,6 | 16,6 |
| Biegezugfestigkeit ($N/mm^2$) a) | 9,4 | 6,3 | 11,7 | 11,1 | 11,8 | 10,4 |
| Druckfestigkeit ($N/mm^2$) a) | 59,5 | 38,7 | 56,5 | 44,8 | 57,0 | 46,7 |

c) Herstellung von Klebemassen

*Beispiel 24*

Aus 100 Gewichtsteilen Portlandzement 35 F und 58 Gewichtsteilen der Emulsion nach Beispiel 18 wurde eine Klebemasse hergestellt, die zu Prüfkörpern aushärteten. Nach 3 Tagen Feuchtlagerung und 4 Tagen Raumlagerung wurden folgende Festigkeiten ermittelt:

| | |
|---|---|
| Biegezugfestigkeit: | 11,5 N/mm$^2$ |
| Druckfestigkeit: | 71,6 N/mm$^2$ |
| Haftzugfestigkeit | |
| auf Stahl: | 1,6 N/mm$^2$ |
| auf Beton: | 3,1 N/mm$^2$ |

**Patentansprüche**

1. Epoxidharz-Diammoniumsalz-Emulsion auf Basis eines flüssigen Epoxidharzes, eines latenten Härters, der das Salz aus einem

a) Diamin der Formeln I oder II

I $H_2N\text{-}CH_2\text{-}R\text{-}NH_2$

II $H_2N\text{-}R\text{-}CH_2\text{-}R\text{-}NH_2$,

wobei R
— ein gegebenenfalls substituierter $C_{4-9}$-Alkylenrest,
— ein gegebenenfalls substituierter $C_{6-9}$-Cycloalkylenrest oder
— ein $C_{7-9}$-Aralkylenrest ist, mit

b) gegebenenfalls hydroxylgruppenhaltigen aliphatischen, cycloaliphatischen oder aromatischen Mono- oder Dicarbonsäuren mit bis zu 12 C-Atomen darstellt, eines Emulgators und Wasser, dadurch gekennzeichnet, dass der Emulgator

a) ein durch Verseifung von Polyvinylacetat gewonnener Polyvinylalkohol mit einem Hydrolysegrad von mindestens 70% und einem Molekulargewicht von mindestens 5000,
b) ein Polyoxazolin mit einem Molekulargewicht von 10 000 bis 100 000 und/oder
c) ein Copolymerisat des N-Vinylpyrrolidons mit
— Vinylestern ein- oder zweibasiger Carbonsäuren mit bis zu 6 C-Atomen,
— (Meth)Acrylsäureestern von ein- und zweiwertigen Alkoholen mit bis zu 6 C-Atomen,
— Malein-, Fumar-, Crotonsäure und/oder
— Styrol

ist.

2. Epoxidharz-Diammoniumsalz-Emulsion gemäss Anspruch 1, dadurch gekennzeichnet, dass man ein in Wasser emulgierbares Epoxidharz einsetzt.

3. Epoxidharz-Diammoniumsalz-Emulsion nach den Ansprüchen 1 und 2, dadurch gekennzeichnet, dass als Emulgator ein Polyvinylalkohol mit einem Molekulargewicht zwischen 10 000 und 100 000 in einer Menge von 0,5 bis 40% eingesetzt wird.

4. Epoxidharz-Diammoniumsalz-Emulsion gemäss Anspruch 1, dadurch gekennzeichnet, dass man 2,2,4- und/oder 2,4,4-Trimethylhexamethylendiamin einsetzt.

5. Epoxidharz-Diammoniumsalz-Emulsion gemäss Anspruch 1, dadurch gekennzeichnet, dass man 2-Methylpentamethylendiamin einsetzt.

6. Epoxidharz-Diammoniumsalz-Emulsion gemäss Anspruch 1, dadurch gekennzeichnet, dass man Isophorondiamin einsetzt.

7. Epoxidharz-Diammoniumsalz-Emulsion nach den Ansprüchen 1 bis 6, dadurch gekennzeichnet, dass diese einen Entschäumer auf Silicon- oder Kohlenwasserstoffbasis enthält.

8. Epoxidharz-Diammoniumsalz-Emulsion nach den Ansprüchen 1 bis 7, dadurch gekennzeichnet, dass diese zusätzlich weitere Hilfsstoffe, wie Betonverflüssigungsmittel oder Beschleuniger, enthält.

9. Verfahren zur Herstellung der Epoxidharz-Diammoniumsalz-Emulsionen nach den Ansprüchen 1 bis 8, dadurch gekennzeichnet, dass man

a) eine wässrige Lösung des Emulgators vorlegt,
b) gegebenenfalls einen Entschäumer zugefügt,
c) die Säure zugefügt,
d) sowie Diamin zufügt, bis der pH-Wert der erhaltenen Lösung zwischen 6 und 6,5 liegt,
e) gegebenenfalls weitere Hilfsstoffe einträgt und
f) in die erhaltene Mischung das flüssige Epoxidharz einrührt.

10. Verwendung der Epoxidharz-Diammoniumsalz-Emulsionen nach den Ansprüchen 1 bis 8 in Epoxidharz-Zement-Mörteln.

11. Verwendung der Epoxidharz-Diammoniumsalz-Emulsionen nach den Ansprüchen 1 bis 8 in Härtungsmischungen, die alkalisch reagierende Stoffe und gegebenenfalls minderalische Füllstoffe enthalten.

12. Verwendung der Epoxidharz-Diammoniumsalz-Emulsionen nach den Ansprüchen 1 bis 8 im Trockenspritzbetonverfahren.

13. Verwendung der Epoxidharz-Diammoniumsalz-Emulsionen nach den Ansprüchen 1 bis 8 in Spachtelmassen auf Basis hydraulisch abbindender alkalischer Bindemittel.

14. Verwendung der Epoxidharz-Diammoniumsalz-Emulsionen nach den Ansprüchen 1 bis 8 in Klebemassen auf Basis hydraulisch abbindender alkalischer Bindemittel.

15. Verwendung der Epoxidharz-Diammoniumsalz-Emulsionen nach den Ansprüchen 1 bis 8 zur Herstellung von Beton-Fertigbauteilen.

16. Verwendung der Epoxidharz-Diammoniumsalz-Emulsionen nach den Ansprüchen 1 bis 8 zur Herstellung von Estrichen.

17. Verwendung der Epoxidharz-Diammoniumsalz-Emulsionen nach den Ansprüchen 1 bis 8 zur Herstellung von Injektionsmassen.

**Claims**

1. An epoxy resin/diammonium salt emulsion based on a liquid epoxy resin, a latent hardener which is the salt of
a) a diamine of the formula I or II

$H_2N\text{-}CH_2\text{-}R\text{-}NH_2$ I

$H_2N\text{-}R\text{-}CH_2\text{-}R\text{-}NH_2$ II

where R is

— an optionally substituted $C_4$ to $C_9$ alkylene radical,
— an optionally substituted $C_6$ to $C_9$ cyloalkylene radical, or
— a $C_7$ to $C_9$ aralkylene radical, with

b) an aliphatic, cycloaliphatic or aromatic mono- or di-carboxylic acid of up to 12 atoms optionally substituted by hydroxy, an emulsifier and water, characterised in that the emulsifier is

a) a polyvinyl alcohol obtained by saponification of polyvinyl acetate and having a degree of hydrolysis of at least 70% and a molecular weight of at least 5,000,
b) a polyoxazoline having a molecular weight of 10,000 to 100,000, and/or
c) a copolymer of N-vinylpyrrolidone with
   — a vinyl ester of a monobasic or dibasic carboxylic acid of up to 6 carbon atoms,
   — a (meth)acrylic acid ester of a monohydride or dihydric alcohol of up to 6 carbon atoms,
   — maleic, fumaric or crotonic acid and/or
   — styrene.

2. An epoxy resin/diammonium salt emulsion according to claim 1, characterised in that an epoxy resin emulsifiable in water is used.

3. An epoxy resin/diammonium salt emulsion according to claim 1 or 2, a polyvinyl alcohol having a molecular weight of 10,000 to 100,000 is used as emulsifier in an amount of from 0.5 to 40%.

4. An epoxy resin/diammonium salt emulsion according to claim 1, characterised in that 2,2,4- and/or 2,4,4-trimethylhexamethylenediamine is used.

5. An epoxy resin/diammonium salt emulsion according to claim 1, characterised in that 2-methylpentamethylenediamine is used.

6. An epoxy resin/diammonium salt emulsion according to claim 1,characterised in that isophorone diamine is used.

7. An epoxy resin/diammonium salt emulsion according to any of claims 1 to 6, characterised in that it contains a silicon-based or hydrocarbon-based antifoaming agent.

8. An epoxy resin/diammonium salt according to any of claims 1 to 7, characterised in that it additionally contains one or more further assistants, such as concrete liquefying agents or accelerators.

9. A process for the manufacture of an epoxy resin/diammonium salt emulsion according to any of claims 1 to 8, characterised in that

a) an aqueous solution of the emulsifier is prepared,
b) optionally an antifoaming agent is added,
c) the acid is added,
d) enough of the diamine is added so that the pH of the resulting solution is from 6 to 6.5,
e) optionally one or more further assistants are introduced, and
f) the liquid epoxy resin is stirred into the resulting mixture.

10. The use of an epoxy resin/diammonium salt emulsion according to any of claims 1 to 8 in epoxy resin/cement mortars.

11. The use of an epoxy resin/diammonium salt emulsion according to any of claims 1 to 8 in hardening mixtures which contain alkaline-reacting substances and optionally mineral fillers.

12. The use of an epoxy resin/diammonium salt emulsion according to any of claims 1 to 8 in the dry injection cement process.

13. The use of an epoxy resin/diammonium salt emulsion according to any of claims 1 to 8 in filling compositions based on hydraulically setting alkaline binding agents.

14. The use of an epoxy resin/diammonium salt emulsion according to any of claims 1 to 8 in adhesive compositions based on hydraulically setting alkaline binding agents.

15. The use of an epoxy resin/diammonium salt emulsion according to any of claims 1 to 8 for the manufacture of ready-made concrete building components.

16. The use of an epoxy resin/diammonium salt emulsion according to any of claims 1 to 8 for the manufacture of plaster floors.

17. The use of an epoxy resin/diammonium salt emulsion according to any of claims 1 to 8 for the manufacture of injection moulding compositions.

**Revendications**

1. Emulsion résine d'époxyde-sel de diammonium à base d'une résine d'époxyde liquide, d'un durcisseur latent qui constitue le sel

a) d'une diamine des formules I ou II

$$H_2N\text{-}CH_2\text{-}R\text{-}NH_2 \quad (I),$$

$$H_2N\text{-}R\text{-}CH_2\text{-}R\text{-}NH_2 \quad (II),$$

dans lesquelles R est

— un radical alkylène en $C_4$ à $C_9$ éventuellement substitué,
— un radical cyclo-alkylène en $C_6$ à $C_9$ éventuellement substitué ou
— un radical aralkylène en $C_7$ à $C_9$, avec

b) des acides mono- ou dicarboxyliques aliphatiques, cyclo-aliphatiques ou aromatiques contenant jusqu'à 12 atomes de carbone et contenant éventuellement des groupes hydroxyle, d'un émulsifiant et d'eau, caractérisée par le fait que l'émulsifiant est

a) un alcool polyvinylique obtenue par saponification de polyacétate de vinyle, ayant un degré d'hydrolyse d'au moins 70% et un poids moléculaire d'au moins 5000,
b) une poly-oxazoline ayant un poids moléculaire de 10 000 à 100 000 et/ou
c) un produit de copolymérisation de la N-vinyl-pyrrolidone avec
   — des esters de vinyle d'acides mono- ou dicarboxyliques contenant jusqu'à 6 atomes de carbone,
   — des esters d'acide (méth)acrylique de mono- et dialcools contenant jusqu'à 6 atomes de carbone,
   — l'acide maléique, fumarique, crotonique et/ou
   — le styrène.

2. Emulsion résine d'époxyde-sel de diammonium selon la revendication 1, caractérisée par le fait que

l'on utilise une résine d'époxyde émulsifiable dans l'eau.

3. Emulsion résine d'époxyde-sel de diammonium selon les revendications 1 et 2, caractérisée par le fait que l'on utilise, comme émulsifiant, un alcool polyvinylique d'un poids moléculaire de 10 000 à 100 000, dans une quantité de 0,5 à 40%.

4. Emulsion résine d'époxyde-sel de diammonium selon la revendication 1, caractérisée par le fait que l'on utilise la 2,2,4- et/ou la 2,4,4-trimethyl-hexaméthylène-diamine.

5. Emulsion résine d'époxyde-sel de diammonium selon la revendication 1, caractérisée par le fait que l'on utilise la 2-méthyl-pentaméthylène-diamine.

6. Emulsion résine d'époxyde-sel de diammonium selon la revendication 1, caractérisée par le fait que l'on utilise l'isophorone-diamine.

7. Emulsion résine d'époxyde-sel de diammonium selon les revendications 1 à 6, caractérisée par le fait qu'elle contient un agent antimousse à base de silicone ou d'hydrocarbure.

8. Emulsion résine d'époxyde-sel de diammonium selon les revendications 1 à 7, caractérisée par le fait qu'elle contient en outre d'autres adjuvants tels que des agents de liquéfaction du béton ou des accélérateurs.

9. Procédé de préparation de l'émulsion résine d'époxyde-sel de diammonium selon les revendications 1 à 8, caractérisé par le fait

a) que l'on place initialement une solution aqueuse de l'émulsifiant,
b) que l'on ajoute éventuellement un agent antimousse,
c) que l'on ajoute l'acide,
d) que l'on ajoute assez de diamine pour que le pH de la solution obtenue se situe entre 6 et 6,5,
e) que l'on incorpore éventuellement d'autres adjuvants et
f) que dans le mélange obtenu, on introduit avec agitation la résine d'époxyde liquide.

10. L'utilisation des émulsions résine d'époxyde-sel de diammonium selon les revendications 1 à 8 dans des mortiers résine d'époxyde-ciment.

11. L'utilisation des émulsions résine d'époxyde-sel de diammonium selon les revendications 1 à 8 dans des mélanges de durcissement qui contiennent des corps à réaction alcaline et éventuellement des charges minérales.

12. L'utilisation des émulsions résine d'époxyde-sel de diammonium selon les revendications 1 à 8 dans le procédé du béton projecté sec.

13. L'utilisation des émulsions résine d'époxyde-sel de diammonium selon les revendications 1 à 8 dans des mastics à base de liants alcalins à prise hydraulique.

14. L'utilisation des émulsions résine d'époxyde-sel de diammonium selon les revendications 1 à 8 dans des masses adhésives à base de liants alcalins à prise hydraulique.

15. L'utilisation des émulsions résine d'époxyde-sel de diammonium selon les revendications 1 à 8 pour la fabrication d'éléments préfabriqués en béton.

16. L'utilisation des émulsions résine d'époxyde-sel de diammonium selon les revendications 1 à 8 pour la réalisation de chapes.

17. L'utilisation des émulsions résine d'époxyde-sel de diammonium selon les revendications 1 à 8 pour la fabrication de masses d'injection.